# EUROPÄISCHE PATENTSCHRIFT

(11) **EP 2 988 103 B1**
(45) Veröffentlichungstag und Bekanntmachung des Hinweises auf die Patenterteilung: **14.02.2018**
(21) Anmeldenummer: 15178779.3
(22) Anmeldetag: 29.07.2015
(51) Int. Cl.: G01F 15/14, G01F 1/66, G01F 5/00

(54) **DURCHFLUSSMESSER MIT EINEM IN EIN GEHÄUSE EINGESETZTEN MESSEINSATZ**
FLOW METER WITH A MEASURING INSERT THAT CAN BE INSERTED INTO A HOUSING
DÉBITMÈTRE DOTÉ D'UN INSERT DE MESURE POUVANT ÊTRE INSÉRÉ DANS UN BOÎTIER

(30) Priorität: 20.08.2014 DE 102014216553
(43) Veröffentlichungstag der Anmeldung: 24.02.2016
(73) Patentinhaber: Landis+Gyr GmbH, 90459 Nürnberg (DE)
(72) Erfinder: Seifert, Christian, 92289 Ursensollen (DE)
(74) Vertreter: Rau, Schneck & Hübner Patentanwälte Rechtsanwälte PartGmbB

(56) Entgegenhaltungen:
- WO-A1-2005/005932
- WO-A1-2012/063447
- WO-A1-2014/029404
- DE-A1-102005 038 599
- DE-B3- 10 327 076

## Beschreibung

Die Erfindung betrifft einen Durchflussmesser zur schallbasierten Erfassung einer Durchflussmenge eines flüssigen oder gasförmigen Mediums mit einem Gehäuse und einem in das Gehäuse eingesetzten Messeinsatz, wobei der Messeinsatz eine während des Betriebs von einem Hauptflussstrang des Mediums in einer Durchflussrichtung durchströmte Messstrecke enthält, die Messstrecke einen während des Betriebs von dem Hauptflussstrang des Mediums durchströmten und von einer Messkanalwand umgebenen Innenraum hat, und in einem Zwischenraum zwischen einer von dem Innenraum abgewandten Außenseite der Messkanalwand und einer Innenseite einer Gehäusewand des Gehäuses mindestens ein Nebendurchflussweg für einen Nebenflussstrang des Mediums gebildet ist.

Ein derartiger Durchflussmesser ist beispielsweise in der DE 10 2005 038 599 A1 beschrieben.

Bekannte derartiger Durchflussmesser basieren auf der (Ultra-)Schallmess-technik. Bei einem solchen Gerät werden impulsförmige (Ultra-)Schallsignale mittels (Ultra-)Schallwandler erzeugt sowie in Flussrichtung und entgegen der Flussrichtung durch das Medium gesendet. Der Unterschied der Laufzeiten der Schallsignale in beiden Laufrichtungen wird zur Ermittlung der Durchflussmenge des Mediums ausgewertet. Diese Durchflussmesser arbeiten nach dem Laufzeitdifferenzprinzip.

Es gibt verschiedene Ausgestaltungen. Zum einen sind Einrichtungen bekannt, die Durchflussmesser im eigentlichen Sinne darstellen und ausschließlich die Durchflussmenge des Mediums ermitteln. Zum anderen gibt es auch Energiezähler, beispielsweise in Form von Wärme- und Kältezählern, bei denen die nach dem vorstehend erläuterten Prinzip ermittelte Durchflussmenge mit einer zusätzlich über ein Temperaturfühlerpaar ermittelten Temperaturdifferenz im Vor- und Rücklauf in Verbindung gebracht wird, um so die über das Medium zugeführte (Wärme- oder Kälte-) Energie zu bestimmen. Auch derartige Energiezähler sind hier als - speziell ausgestaltete - Durchflussmesser zu verstehen.

Das Schallsignal kann auf unterschiedlichen Laufwegen durch das zu erfassende Medium gesendet werden. Günstig ist es, wenn möglichst das komplette Durchflussprofil des Mediums erfasst wird. Um dies zu erreichen, wird in der EP 1 337 810 B1 ein Durchflussmesser beschrieben, bei dem ein schraubenförmiger Laufweg des Schallsignals durch das zu erfassende Medium vorgesehen ist. Das von dem Schallwandler ausgesendete Schallsignal erhält den schraubenförmigen Laufweg durch das Medium mittels Reflexionen an den Wänden des die Messstrecke umschließenden Messkanals. Eine schräge Durchschallung der Messstrecke ist auch bei den in der DE 10 2004 060 118 A1 beschriebenen Ausgestaltungen von ultraschallbasierten Volumen- und/oder Massendurchflussmessern vorgesehen.

Bekannt sind weitere Ausgestaltungen von Ultraschall-Durchflussmessern, die einen austauschbaren Messeinsatz aufweisen. So wird in der EP 0 890 826 B1 ein austauschbarer wannenförmiger Messeinsatz aus Kunststoff mit in spezielle Taschen eingebrachten Reflexionsscheiben beschrieben. Weiterhin wird in der EP 0 477 418 A1 ein Durchflussmesser mit einem Messeinsatz in Form einer wannenartigen Blechkonstruktion beschrieben. Auch der in der EP 2 006 646 A1 offenbarte Ultraschalldurchflussmesser hat einen austauschbaren Messeinsatz, bei dem die Schallwandler auf einander gegenüberliegenden Seiten der Messstrecke angeordnet sind. Die Austauschbarkeit der Messeinsätze erleichtert die Wartung und auch eine ggf. erforderliche Neueichung oder Neukalibrierung.

In der EP 0 520 306 A2 wird ein Flügelrad-Wasserzähler beschrieben, der einen Messeinsatz umfasst, wobei ein Bypass vorgesehen ist. Ein Flügelbecherunterteil bildet ein Gehäuse, in das der Messeinsatz eingesetzt ist, und welches Bypass-Öffnungen aufweist, um die Menge des durch die Bypass-Öffnungen hindurch tretenden Wassers justieren zu können.

In der DE 10 2004 060 065 A1 wird ein Ultraschall-Durchflussmesser beschrieben, der einen von dem ein Gehäuse bildenden Strömungsrohr beabstandenden Reflexionskörper umfasst. Im Zwischenraum zwischen der Wand des Strömungsrohrs und dem Reflexionskörper kann sich ein Nebendurchflussweg für das zu erfassende Medium bilden.

In der DE 10 2013 008 781 A1 wird ein Ultraschall-Durchflusszähler beschrieben, der einen Bypasskanal aufweist. Dieser Bypasskanal hat aufgrund seiner abschnittsweisen U-förmigen Ausgestaltung auch Abschnitte, die verglichen mit der Durchflussrichtung des Mediums durch die Hauptmessstrecke einen Neigungswinkel von größer als 0° aufweisen. Die durch den Bypasskanal gebildete Nebenmessstrecke und die Hauptmessstrecke werden alternativ betrieben, die Hauptmessstrecke bei großen Durchflussmengen und die durch den Bypasskanal gebildete Nebenmessstrecke bei kleinen Durchflussmengen. Bei einer geringen Durchflussmenge ist die Hauptmessstrecke mittels eines Absperrventils blockiert.

In der US 4,173,889 wird ein Ultraschall-Durchflussmesser mit einer schrägen Durchschallung der Messstrecke beschrieben. Neben der Messstrecke ist eine ringförmige Kammer angeordnet, die durch Öffnungen mit der Messstrecke verbunden ist. Die beiden Schallwandler strahlen zunächst in diese ringförmige Kammer ein, die somit zur Ankopplung der Schallwandler dient.

In der US 5,419,329 wird ein Ultraschall-Spirometer beschrieben, bei dem eine schräge Durchschallung vorgesehen ist. An der Messkanalwand ist ein Flansch mit einer Ausnehmung angeformt.

In der DE 103 27 076 B3 ist ein weiterer Durchflussmesser zur schallbasierten Erfassung einer Durchflussmenge eines Mediums mit einem Gehäuse und einer durch einen Messeinsatz gebildeten Messstrecke mit einem Innenraum beschrieben. Vor und nach der Messstrecke sind Umlenkspiegelhalter mit Umlenkspiegeln angeordnet, wobei an dem vor der Messstrecke platzierten Umlenkspiegelhalter zur Vermeidung von Rezirkulationswirbeln eine Düse mit einem leicht gekrümmten Verlauf enthalten ist. Diese Düse zweigt einen Teilstrom des ansonsten den Umlenkspiegelhalter umströmenden Mediums ab und leitet ihn durch den Umlenkspiegelhalter.

Obwohl bereits viele ultraschalbasierte Durchflussmesser bekannt sind, besteht weiterhin Bedarf an verbesserten Lösungen im Hinblick auf die Handhabung, Bedien-/Betriebssicherheit und/oder Messgenauigkeit derartiger Geräte.

Die Aufgabe der Erfindung besteht darin, einen Durchflussmesser der eingangs bezeichneten Art anzugeben, der gegenüber den bekannten Durchflussmessern weiter verbessert ist.

Zur Lösung dieser Aufgabe wird ein Durchflussmesser entsprechend den Merkmalen des Patentanspruchs 1 angegeben. Der erfindungsgemäße Durchflussmesser ist ein solcher, bei dem jeder Nebendurchflussweg zumindest abschnittsweise unter einem Neigungswinkel von größer als 0° zu der Durchflussrichtung verläuft. Insbesondere beträgt der Neigungswinkel höchstens 90°. Zwischen der Außenseite der Messkanalwand und der Innenseite der Gehäusewand sind mindestens zwei in Durchflussrichtung hintereinander angeordnete Stege angebracht, die jeweils mindestens eine Stegausnehmung haben, welche jeweils eine in die Durchflussrichtung verlaufende Durchgangsöffnung bildet, wobei jede Durchgangsöffnung eines Stegs bezogen auf die Durchflussrichtung radial oder tangential versetzt zu jeder Durchgangsöffnung des in Durchflussrichtung benachbart angeordneten Stegs angeordnet ist.

Der Nebenflussstrang ist ein insbesondere messtechnisch vernachlässigbarer Anteil des Mediums, der als nicht erfassbare Passivströmung an der Messstrecke vorbeigeleitet wird. Es wurde erkannt, dass der an der Messstrecke vorbeigeleitete Nebenflussstrang einerseits keinen negativen Anteil auf die Messgenauigkeit des Durchflussmessers hat. Andererseits verhindert der Nebenflussstrang, der die Messkanalwand insbesondere an deren Außenseite umströmt, vorteilhafterweise die Ausbildung einer toten Zone mit stehendem Medium im Zwischenbereich zwischen der Außenseite der Messkanalwand und der Innenseite einer Gehäusewand. In dem stehenden Medium der toten Zone könnten sich andernfalls Bakterien bilden, was insbesondere bei einem Einsatz des Durchflussmessers in einer Trinkwasserleitung zu Problemen führen könnte, weshalb solche tote Zonen ungünstig sind. Dadurch, dass der Nebenflussstrang zumindest bereichsweise insbesondere nicht parallel zur Durchflussrichtung, sondern vorteilhafterweise geneigt zur Durchflussrichtung verläuft, wird eine besonders gute und effiziente Umspülung von Bereichen erreicht, in denen sich ansonsten tote Zonen ausbilden könnten. Der erfindungsgemäße Durchflussmesser enthält mit dem insbesondere definierten Nebendurchflussweg für den Nebenflussstrang also ein gezielt und gesondert vorgesehenes bzw. eingebautes Mittel zur Vermeidung toter Zonen mit stehendem Medium. Die Nebendurchflusswege können in verschiedener Anzahl vorgesehen sein. Denkbar ist z.B. ein einziger Nebendurchflussweg. Ebenso gibt es aber auch Ausführungsbeispiele mit insbesondere zwei, vier, sechs, acht oder auch bis zu zwölf Nebendurchflusswegen. Jeder Nebendurchflussweg verläuft in dem Zwischenraum außerhalb des Messkanals insbesondere von einem ersten (oder bezüglich der Durchflussrichtung vorderen) axialen Rand des Messkanals zu einem zweiten (oder bezüglich der Durchflussrichtung hinteren) axialen Rand des Messkanals.

Insbesondere fluchten die Durchgangsöffnungen zweier in Durchflussrichtung benachbarter Stege nicht in Durchflussrichtung. Es resultiert der günstige Nebendurchflussweg mit dem abschnittsweise gegenüber der Durchflussrichtung geneigten Verlauf und mit der vorteilhaften Um- bzw. Durchspülung potentieller toter Zonen. Die Durchgangsöffnungen sind insbesondere Bestandteile des Nebendurchflusswegs und bestimmen außerdem durch ihre relative Anordnung zueinander insbesondere auch den Verlauf des Nebendurchflusswegs im Bereich zwischen zwei in Durchflussrichtung benachbarten Stegen. Die Durchgangsöffnungen sind ein sehr gut geeignetes Mittel, um den mindestens einen Nebendurchflussweg mit der zumindest abschnittsweisen Neigung gegenüber der Durchflussrichtung zu bilden oder zu bestimmen.

Bei dem Durchflussmesser handelt es sich um einen solchen zur schallbasierten Erfassung der Durchflussmenge des Mediums handeln. Die dabei benötigten Schallwandler können in unterschiedlicher Ausgestaltung vorliegen. Bei einer bevorzugten Ausführungsform sind zwei Schallwandler vorhanden, die jeweils sowohl als Schallsender als auch als Schallempfänger ausgebildet sind, so dass beispielsweise impulsförmige Schallsignale in Durchflussrichtung und entgegen der Durchflussrichtung des Mediums in die Messstrecke eingespeist werden können, und die Ermittlung der Durchflussmenge des Mediums anhand des Laufzeitdifferenzprinzips erfolgen kann. Die beiden Schallwandler erzeugen also insbesondere zwei Schallsignale, die die Messstrecke im Wesentlichen in entgegengesetzter Richtung durchlaufen.

Der Messeinsatz ist insbesondere lösbar in das Gehäuse eingesetzt. Er kann beispielsweise nach einer bestimmten Betriebsdauer und/oder zu Wartungs- und/oder (Neu-)Kalibrierungszwecken ausgebaut und bei Bedarf ausgetauscht werden. Insbesondere ist der Messeinsatz längs der Durchflussrichtung in das Gehäuse einschiebbar, z.B. ausgehend von einer Anschlussöffnung des Gehäuses.

Der Messeinsatz ist vorzugsweise aus oder mit einem Kunststoff hergestellt. Er kann neben dem eigentlichen Messkanal weitere Komponenten umfassen, wie z.B. jeweils einen eingangsseitig und ausgangsseitig des Messkanals angeordneten Umlenkhalter mit einem Umlenkelement zur Umlenkung eines Messsignals, beispielsweise eines Schallsignals. Die beiden Umlenkhalter können entweder jeweils fest oder lösbar mit dem eigentlichen Messkanal verbunden sein. Der Messeinsatz kann eine ein- oder mehrteilige Einheit sein. Der eigentliche Messkanal kann eine ausschließlich aus Kunststoff bestehende Subeinheit sein. Jeder der beiden Umlenkhalter hält oder trägt jeweils eines der beispielsweise als insbesondere metallische Reflektorspiegel ausgeführten Umlenkelemente. Die Umlenkelemente können dazu insbesondere mit dem Kunststoff des jeweiligen Umlenkhalters umspritzt sein, so dass sie zumindest teilweise in den Kunststoff des betreffenden Umlenkhalters eingebettet, insbesondere nicht lösbar eingebettet sind. Eine Reflexionsfläche des Umlenkhalters kann dabei aber frei zugänglich, also insbesondere nicht mit Kunststoff bedeckt sein. Der aus einem Kunststoff bestehende Umlenkhalter und der insbesondere eingespritzte metallische Reflektorspiegel sind eine Kunststoff-Metall-Subeinheit des Messeinsatzes, welche in der einteiligen Ausgestaltung des Messeinsatzes entweder - beispielsweise während eines gemeinsamen Spritzgießvorgangs - unmittelbar fest verbunden mit dem Messkanal hergestellt wird oder nachträglich mit dem Messkanal fest verbunden wird, insbesondere mittels einer Stoffschlussverbindung, wie z.B. einer Schweiß- oder Klebeverbindung, oder mittels Anspritzens.

Bevorzugt bestehen ggf. abgesehen von den Umlenkelementen alle anderen Komponenten des Messeinsatzes aus dem gleichen Material, insbesondere aus einem Kunststoff. Dies reduziert den Herstellungsaufwand und führt auch zu einem verbesserten Betriebsverhalten, da sich so die Verbindung der verschiedenen Bestandteile vereinfacht. Außerdem werden auf diese Weise auch z.B. temperaturbedingte mechanische Spannungen zwischen den einzelnen Bestandteilen, die sich andernfalls bei einer Herstellung aus verschiedenen Materialien ergeben können, vermieden.

Vorteilhafte Ausgestaltungen des erfindungsgemäßen Durchflussmessers ergeben sich aus den Merkmalen der von Anspruch 1 abhängigen Ansprüche.

Günstig ist eine Ausgestaltung, bei der der Neigungswinkel im Bereich zwischen 5° und 85°, bevorzugt zwischen 15° und 75°, höchst bevorzugt zwischen 30° und 60° liegt. Dadurch ergibt sich eine besonders effiziente Um- bzw. Durchspülung potentieller toter Zonen, so dass es während des Betriebs praktisch nirgendwo innerhalb des Durchflussmessers zu stehendem Medium kommt.

Gemäß einer weiteren günstigen Ausgestaltung hat der Hauptflussstrang zumindest an einer Position in Durchflussrichtung eine senkrecht zur Durchflussrichtung orientierte Hauptflussquerschnittsfläche und der Nebenflussstrang an dieser Position in Durchflussrichtung eine senkrecht zur Durchflussrichtung orientierte Nebenflussquerschnittsfläche, deren Größe im Bereich zwischen 1 % und 15 %, bevorzugt zwischen 3 % und 13 %, höchst bevorzugt zwischen 5 % und 10 % der Größe der Hauptquerschnittsfläche liegt. Die Nebenflussquerschnittsfläche kann sich insbesondere aus mehreren Teilflächen zusammensetzen, z.B. dann, wenn mehr als ein Nebendurchflussweg vorhanden ist. Sie ist insofern insbesondere als gesamte, also alle Teilflächen umfassende, Nebenflussquerschnittsfläche zu verstehen. Diese Flächenverhältnisse stellen einen sehr guten Kompromiss dar. Zum einen bleibt die Messgenauigkeit hoch, da nur ein kleiner Anteil des Mediums als Nebenflussstrang an der eigentlichen Messstrecke vorbeigeleitet wird. Zum anderen ist der vorbeigeleitete Anteil groß genug, um eine gute Um- bzw. Durchspülung aller potentiellen toten Zonen sicherzustellen.

Gemäß einer weiteren günstigen Ausgestaltung umgibt jeder Steg die Messkanalwand im Wesentlichen, d.h. ggf. abgesehen von den Stegausnehmungen, vollständig. Dadurch wird eine sehr gute Abdichtung des Zwischenraums zwischen der Außenseite der Messkanalwand und der Innenseite des Gehäuses erreicht. Das Medium kann dann nicht unkontrolliert an der Messstrecke vorbeiströmen, sondern insbesondere nur an den gezielt vorgesehenen und Bestandteile des mindestens einen Nebendurchflusswegs bildenden Stellen.

Gemäß einer weiteren günstigen Ausgestaltung ist jeder Steg im Wesentlichen als ein Ringsteg ausgebildet. Die insbesondere einfach herzustellende und eine einfache Montage des Messeinsatzes innerhalb des Gehäuses bedingende Ringsteg-Geometrie kommt insbesondere bei (hohl)zylindrisch ausgeführtem Gehäuse und/oder bei (hohl)zylindrisch ausgeführter Messkanalwand zum Einsatz.

Gemäß einer weiteren günstigen Ausgestaltung verschließt jeder Steg einen Zwischenraum zwischen der Innenseite der Gehäusewand und der Außenseite der Messkanalwand abgesehen von den die Durchgangsöffnungen bildenden Stegausnehmungen jeweils vollständig. Das Medium kann dann nicht unkontrolliert an der Messstrecke vorbeiströmen, sondern nur an den Durchgangsöffnungen, die insbesondere auch Bestandteile des mindestens einen Nebendurchflusswegs sind.

Gemäß einer weiteren günstigen Ausgestaltung ist jeder Steg einstückig an der Außenseite der Messkanalwand angebracht. Der Steg ist insbesondere als ein Vorsprung der Messkanalwand ausgebildet. Ein Messeinsatz mit einem solchen außen an der Messkanalwand einstückig angeformten Steg ist einfach herzustellen und lässt sich gut im Gehäuse montieren, z.B. mittels Einschiebens in die Anschlussöffnung des Gehäuses. Insbesondere liegt der Steg im eingesetzten Zustand des Messeinsatzes an der Innenseite der Gehäusewand an und dichtet somit den Zwischenraum zwischen der Gehäusewand und der Messkanalwand sehr gut ab.

Gemäß einer weiteren günstigen Ausgestaltung ist jede Stegausnehmung bezogen auf die Durchflussrichtung tangential jeweils um einen Versatzwinkel aus dem Bereich [30°; 150°] gegenüber jeder Stegausnehmung des in Durchflussrichtung benachbarten Stegs versetzt. Dadurch lässt sich der vorteilhafte abschnittsweise gegenüber der Durchflussrichtung geneigte Verlauf des Nebendurchflusswegs in einfacher und dennoch sehr wirksamer Weise erreichen.

Gemäß einer weiteren günstigen Ausgestaltung hat jeder Steg zwei bezogen auf die Durchflussrichtung tangential um 180° gegeneinander versetzte Stegausnehmungen. Dadurch ergeben sich mindestens zwei Nebendurchflusswege, die im Wesentlichen so zueinander angeordnet sind, dass die von der Messkanalwand umgebene eigentliche Messstrecke zwischen ihnen liegt. Folglich wird die Außenseite der Messkanalwand praktisch überall sehr gut von dem Nebenflussstrang umspült. Die gleiche vorteilhafte Wirkung ergibt sich auch und wird sogar noch verstärkt durch eine weitere günstige Ausgestaltung, gemäß der die Stegausnehmungen von in Durchflussrichtung zueinander benachbarten Stegen bezogen auf die Durchflussrichtung tangential jeweils um 60° oder 120° gegeneinander versetzt sind. Andere stegübergreifende tangentiale Versatzwinkel der Stegausnehmungen sind ebenfalls möglich, so z.B. 75° oder 115° einerseits oder 90° andererseits, wobei im zuletzt genannten Fall eine sehr gleichmäßige Verteilung aller insgesamt vier Stegausnehmungen resultiert, so dass sich auch eine sehr gleichmäßige Um- und/oder Durchspülung potentieller toter Zonen einstellt.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: ein Ausführungsbeispiel eines Durchflussmessers mit einem in ein Gehäuse eingesetzten Messeinsatz und mit einem Nebendurchflussweg in einer Seitenansicht,
- Fig. 2: den Durchflussmesser gemäß Fig. 1 in Darstellung des Querschnitts II-II gemäß Fig. 1,
- Fig. 3: den Messeinsatz des Durchflussmessers gemäß Fig. 1 in einer Seitenansicht, und
- Fig. 4 und 5: den Messeinsatz gemäß Fig. 3 in Darstellung der beiden Querschnitte IV-IV und V-V gemäß Fig. 3.

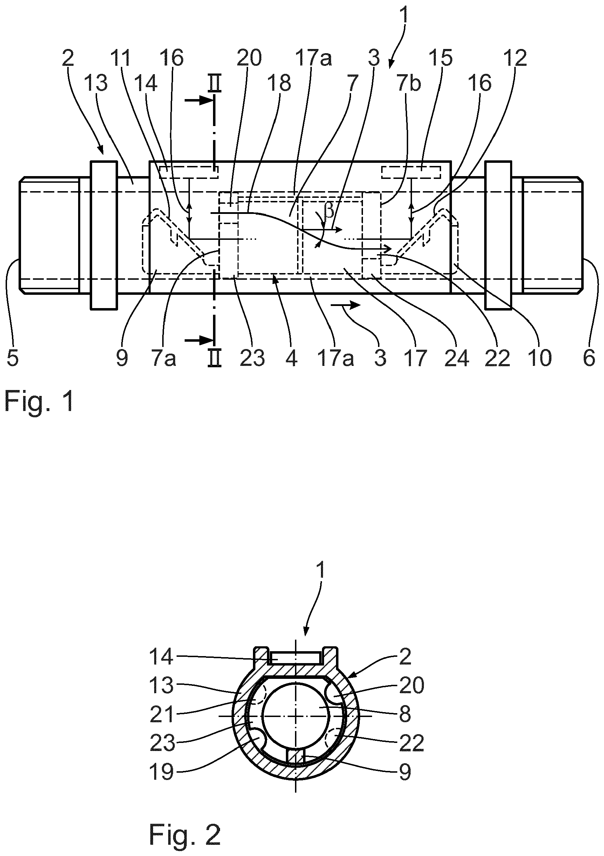

Einander entsprechende Teile sind in den Fig. 1 bis 5 mit denselben Bezugszeichen versehen. Auch Einzelheiten der im Folgenden näher erläuterten Ausführungsbeispiele können für sich genommen eine Erfindung darstellen oder Teil eines Erfindungsgegenstands sein.

In Fig. 1 ist ein Ausführungsbeispiel eines Durchflussmessers 1 zur Erfassung der Durchflussmenge eines durch ein Gehäuse 2 strömenden Mediums dargestellt. Das Medium durchströmt während des Betriebs das Gehäuse 2 in der durch den Pfeil angedeuteten Durchflussrichtung 3. Das Gehäuse 2 ist bei dem gezeigten Ausführungsbeispiel als gesondertes Armaturengehäuse ausgebildet, das in ein von dem zu erfassenden Medium durchflossenes Rohrleitungssystem einzubauen ist. Grundsätzlich ist aber auch eine alternative Ausgestaltung möglich, bei der das Gehäuse kein gesondertes Bauteil ist, sondern als ein Rohrabschnitt des Rohrleitungssystems ausgebildet ist. Das Gehäuse 2 besteht bei dem gezeigten Ausführungsbeispiel aus Kunststoff. Es ist ein Spritzgussteil.

Der Durchflussmesser 1 ist ultraschallbasiert und beruht auf dem Laufzeitdifferenzprinzip. Das in Fig. 1 gezeigte Ausführungsbeispiel ist zur Erfassung der Durchflussmenge des Mediums ausgelegt. Dies ist allerdings nicht einschränkend zu verstehen. Der Durchflussmesser 1 kann nämlich grundsätzlich auch Bestandteil einer kombinierten Erfassungseinheit, beispielsweise zur Erfassung einer über das Rohrleitungssystem zugeführten Menge an Wärme- oder Kälteenergie sein. Dazu sind zwei in Fig. 1 nicht dargestellte zusätzliche Temperatursensoren zur Erfassung einer Temperaturdifferenz zwischen Vor- und Rücklauf vorgesehen. Ein so ausgebildeter Wärme- oder Kältezähler erfasst dann die über das Rohrleitungssystem angelieferte und verbrauchte Wärme- oder Kälte-Energie. Im Folgenden wird ohne Einschränkung der Allgemeingültigkeit nur auf die Erfassung der Durchflussmenge des Mediums eingegangen.

Der Durchflussmesser 1 umfasst einen bei Bedarf auch austauschbaren Messeinsatz 4, der in das Gehäuse 2 eingesetzt ist und in der Darstellung gemäß Fig.1 in gestrichelter Linienführung gezeigt ist. Das Einsetzen erfolgt insbesondere mittels Einschiebens in das Gehäuse 2 durch die vordere Anschlussöffnung 5 in Durchflussrichtung 3 oder durch die hintere Anschlussöffnung 6 entgegen der Durchflussrichtung 3.

Der Messeinsatz 4 hat einen zentralen Hauptabschnitt in Form eines aus Kunststoff, insbesondere aus einem thermoplastischen Kunststoff, vorzugsweise aus PPA, bestehenden Messkanals 7, der die eigentliche Messstrecke 8 in Form eines während des Betriebs von dem zu erfassenden Medium durchflossenen zylindrischen Hohlraums umfasst. Außerdem hat der Messeinsatz 4 einen in Durchflussrichtung 3 gesehen eingangsseitigen Umlenkhalter 9 und einen in Durchflussrichtung 3 gesehen ausgangsseitigen Umlenkhalter 10. Der Umlenkhalter 9 trägt einen eingangsseitigen metallischen Umlenkspiegel 11, der Umlenkhalter 10 einen ausgangsseitigen metallischen Umlenkspiegel 12. Die Umlenkhalter 9, 10 bestehen ebenfalls aus Kunststoff, insbesondere aus dem gleichen Kunststoff wie der Messkanal 7. Während des Herstellungsprozesses werden die Umlenkspiegel 11, 12 mit dem Kunststoff umspritzt. Sie sind also in den Kunststoff der Umlenkhalter 9, 10 fest eingebettet. Die beiden Umlenkhalter 9 und 10 sind jeweils fest an den Messkanal 7 angeformt, beispielsweise angespritzt, der eingangsseitige Umlenkhalter 9 an einer ersten axialen Stirnseite des Messkanals 7 und der ausgangsseitige Umlenkhalter 10 an einer der ersten axialen Stirnseite in Durchflussrichtung 3 gegenüberliegenden zweiten axialen Stirnseite des Messkanals 7. Mit "axial" ist hier eine Richtung in Durchflussrichtung 3 oder parallel zur Durchflussrichtung 3 bezeichnet. Der Messeinsatz 4 erstreckt sich in einer Längsrichtung, die gleich der oder parallel zu der Durchflussrichtung 3 ist.

Die verschiedenen Bestandteile des Messeinsatzes 4, also der die eigentliche Messstrecke 8 umfassende Messkanal 7, die beiden Umlenkspiegel 11 und 12 und die sie tragenden Umlenkhalter 9 und 10, formen ein einziges gemeinsames Bauteil. Bei einem alternativen nicht gezeigten Ausführungsbeispiel kann der Messeinsatz 4 auch mehrteilig ausgebildet sein, wobei die einzelnen Bestandteile nicht fest, sondern zumindest teilweise auch nur lose oder wenigstens lösbar miteinander verbunden sein können.

Der Messeinsatz 4 ist vorzugsweise in Bezug auf eine Mittenquerschnittsebene spiegelsymmetrisch aufgebaut. Er hat bezüglich der Durchflussrichtung 3 insbesondere keine Vorzugsorientierung und ist vorteilhafterweise auch mit umgekehrter Orientierung, also mit der vorderen Anschlussöffnung 5 zugewandtem und dann die Eingangsseite bildendem Umlenkhalter 10 und mit der hinteren Anschlussöffnung 6 zugewandtem und dann die Ausgangsseite bildendem Umlenkhalter 9, in das Gehäuse 2 einsetzbar. Der Messeinsatz 4 ist deshalb sehr montagefreundlich. Insbesondere kann es aufgrund des symmetrischen Aufbaus beim Einsetzen des Messeinsatzes 4 in das Gehäuse 2 zu keinen Fehlern wegen etwaiger Missachtung der Orientierung kommen.

Auf eine Gehäusewand 13 des Gehäuses 2 sind außenseitig zwei Ultraschallwandler 14 und 15 aufgesetzt. Die Ultraschallwandler 14 und 15 sind in ihrer Lage bezüglich der Gehäusewand 13 in nicht näher gezeigter Weise fixiert.

Der Durchflussmesser 1 arbeitet bidirektional. Die Ultraschallwandler 14 und 15 sind jeweils zum Senden und Empfangen eines Schallsignals 16 ausgelegt. Die Ultraschallwandler 14 und 15 sind so orientiert, dass das von ihnen erzeugte oder empfangene Schallsignal 16 im Wesentlichen senkrecht zur Durchflussrichtung 3 ausgesendet bzw. empfangen wird (siehe in Fig. 1 mit eingetragener Weg des Schallsignals 16).

In zur Durchflussrichtung 3 senkrechter (= radialer) Richtung ist benachbart zu jedem der beiden Ultraschallwandler 14 und 15 jeweils einer der beiden Umlenkspiegel 11 und 12 angeordnet. Ein von einem der beiden Ultraschallwandler 14 oder 15 erzeugtes Schallsignal 16 wird an dem diesem Ultraschallwandler 14 oder 15 zugeordneten Umlenkspiegel 11 bzw. 12 umgelenkt, so dass es sich danach im Wesentlichen parallel zur Durchflussrichtung 3 ausbreitet und die Messstrecke 8 des Messkanals 7 durchläuft. Am gegenüberliegenden Ende der Messstrecke 8 wird das Schallsignal 16 am anderen der beiden Schallreflektoren 12 oder 11 erneut umgelenkt, um dann vom anderen der beiden Ultraschallwandler 15 oder 14 empfangen zu werden.

Wie bereits erwähnt, sind die Ultraschallwandler 14 und 15 jeweils sowohl als Schallsender als auch als Schallempfänger ausgebildet. Somit gibt es zwei entgegengesetzt orientierte Schallausbreitungsrichtungen, nämlich zum einen im Wesentlichen in Durchflussrichtung 3 und zum anderen im Wesentlichen entgegen der Durchflussrichtung 3. Insbesondere können beispielsweise impulsförmige Schallsignale 16 in Durchflussrichtung 3 und entgegen der Durchflussrichtung 3 in die Messstrecke 8 eingespeist werden. Aus der Laufzeitdifferenz dieser beiden entgegengesetzt orientierten Schallsignale 16 wird dann in einer nicht näher gezeigten Auswerteeinheit die Durchflussmenge des Mediums ermittelt.

Der zylindrische Hohlraum des Messkanals 7 ist von einer Messkanalwand 17 umgeben. In diesem Hohlraum fließt während des Betriebs des Durchflusszählers 1 der größte Anteil des zu erfassenden Mediums. Dieser Anteil ist der Hauptflussstrang des Mediums.

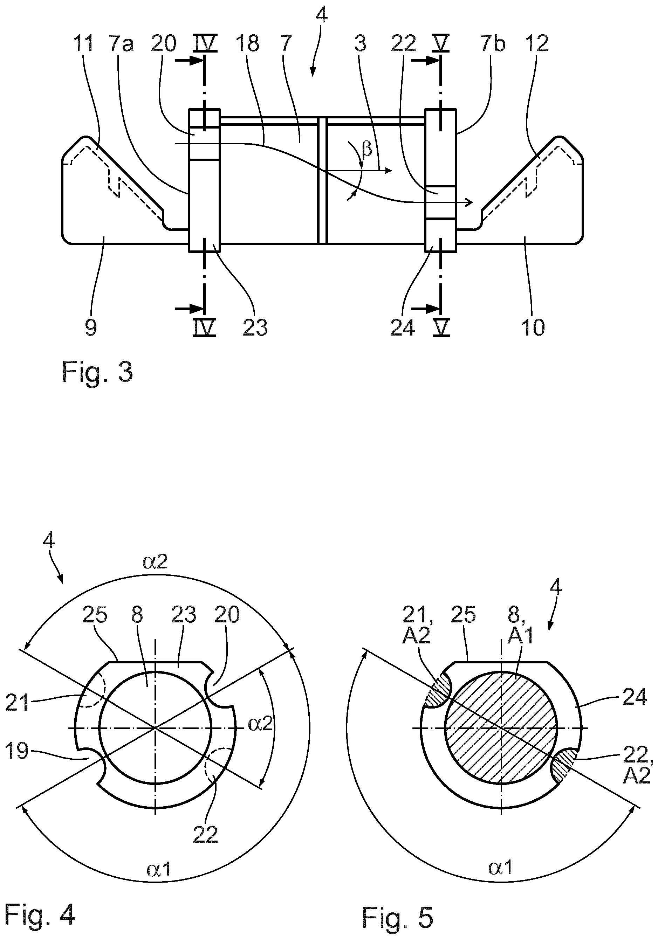

Abgesehen von diesem innerhalb des Messkanals 7 verlaufenden Hauptdurchflussweg gibt es mindestens einen außen am Messkanal 7 vorbei und in einem Zwischenraum 17a zwischen der Außenseite der Messkanalwand 17 und der Innenseite der Gehäusewand 13 verlaufenden Nebendurchflussweg 18 für einen Nebenflussstrang des Mediums. Bei dem gezeigten Ausführungsbeispiel hat der Durchflussmesser 1 zwei solcher Nebendurchflusswege 18, wovon in Fig. 1 und 3 jeweils nur einer ersichtlich ist. Der zweite Nebendurchflussweg 18 verläuft auf der in Blickrichtung rückwärtigen Seite des in Fig. 1 und 3 abgebildeten Messeinsatzes 4 in ähnlicher Weise wie der dargestellte erste Nebendurchflussweg 18.

Die in dem Zwischenraum 17a verlaufenden Nebendurchflusswege 18 verbinden jeweils einen ersten axialen Rand 7a des Messkanals 7 mit einem zweiten axialen Rand 7b des Messkanals 7 und haben dabei jeweils einen Verlauf, der insbesondere aufgrund der im Wesentlichen zylindrischen Geometrie der Außenseite der Messkanalwand 17 und der Innenseite der Gehäusewand 13 in etwa einem Teil einer Spiralbahn gleicht. Außerdem weist der Nebendurchflussweg 18 zumindest einen Abschnitt auf, der um einen von Null verschiedenen, insbesondere spitzen Neigungswinkel β gegenüber der Durchflussrichtung 3 geneigt ist. Dieser Neigungswinkel β ist auch bei dem in etwa spiralförmigen Verlauf der Nebendurchflusswege 18 überall in Bezug zur Durchflussrichtung 3 definiert.

Der abschnittsweise gegenüber der Durchflussrichtung 3 geneigte Verlauf der Nebendurchflusswege 18 ergibt sich aufgrund zweier in bestimmter und nachfolgend im Zusammenhang mit Fig. 3 - 5 näher erläuterter Weise mit Stegausnehmungen 19, 20, 21, und 22 versehener Ringstege 23 und 24, die außen an der Messkanalwand 17 jeweils im Bereich der beiden axialen Stirnseiten des Messkanals 7 einstückig angeformt sind. In Fig. 2 ist eine Querschnittsdarstellung des Durchflussmessers 1 mit einer Draufsicht auf den in Durchflussrichtung 3 betrachteten vorderen Ringsteg 23 gezeigt.

Die Ringstege 23, 24 kontaktieren im eingesetzten Zustand des Messeinsatzes 4 abgesehen von den Bereichen der Stegausnehmungen 19 - 22 die Innenseite der Gehäusewand 13. Zumindest liegen die Ringstege 23, 24 dort so nahe an der Innenseite der Gehäusewand 13 an, dass durch den ggf. verbleibenden Restspalt während des Betriebs kein Medium hindurch tritt. Aufgrund dieses engen Kontakts zur Innenseite der Gehäusewand 13 stellen die Ringstege 23, 24 insbesondere auch eine korrekte Einbaulage des Messeinsatzes 4 im Gehäuse 2 sicher.

Dieser enge Kontakt zur Innenseite der Gehäusewand 13 ist im Bereich der Stegausnehmungen 19 - 22 nicht gegeben. Die Stegausnehmungen 19 - 22 bilden jeweils die Stegbreite der Ringstege 23, 24 in Durchflussrichtung 3 vollständig durchdringende Durchgangsöffnungen, durch die der Nebenflussstrang des Mediums gezielt an der innerhalb des Messkanals 7 verlaufenden eigentlichen Messstrecke 8 vorbei geleitet wird. Dadurch wird eine Um- und/oder Durchspülung im Zwischenraum zwischen der Messkanalwand 17 und der Gehäusewand 13 ggf. vorhandener toter Zonen bewirkt. In diesen toten Zonen könnte sich ohne diese vorteilhafte Um- und/oder Durchspülung andernfalls stehendes Medium ansammeln, wodurch sich Bakterien in dem Medium bilden könnten. Letzteres ist insbesondere bei einem Einsatz des Durchflussmessers 1 in einer Trinkwasserleitung ungünstig und auch unerwünscht.

Die zumindest abschnittsweise Neigung der Nebendurchflusswege 18 gegenüber der Durchflussrichtung 3 hat vorteilhafterweise auch zur Folge, dass zumindest bei dem im Wesentlichen in Zylindergeometrie ausgeführten Durchflussmesser 1 der Nebenflussstrang nicht nur eine Richtungskomponente in axialer Richtung, also in Durchflussrichtung 3, sondern auch eine Richtungskomponente in dazu senkrechter, nämlich insbesondere tangentialer Richtung aufweist, wodurch eine bessere Um- oder/und Durchspülung potentieller toter Zonen erreicht wird.

Bei dem Ausführungsbeispiel des Durchflussmessers 1 mit den zwei am axialen Anfang und am axialen Ende des Messkanals 7 angeordneten Ringstegen 23, 24 liegt der Bereich mit der größten Neigung der Nebendurchflusswege 18 gegenüber der Durchflussrichtung 3 in etwa in der axialen Mitte des Messkanals 7. In diesem Bereich liegt bei dem gezeigten Ausführungsbeispiel ein Neigungswinkel β von etwa 40° vor. Es gibt aber andere Bereiche der Nebendurchflusswege 18, in denen der jeweilige Neigungswinkel β etwas niedriger, beispielsweise bei etwa 30° oder 20° oder darunter liegt. Außerdem gibt es alternative nicht gezeigte Ausführungsbeispiele, bei denen die beiden Ringstege 23, 24 beispielsweise axial enger beieinander stehen, so dass dann auch größere maximale Neigungswinkel β von etwa 50°, 60° oder 70° und ggf. sogar noch mehr resultieren können.

Bei einem nicht gezeigten alternativen Ausführungsbeispiel können die Ringstege anstelle an der Außenseite der Messkanalwand 17 auch an der Innenseite der Gehäusewand 13 angeformt sein. Die Stegausnehmungen können dann analog wie vorstehend beschrieben vorhanden sein, um wiederum abschnittsweise gegenüber der Durchflussrichtung 3 geneigte Verläufe der Nebendurchflusswege 18 zu erzielen.

Im Folgenden werden unter Bezugnahme auf die ausschließlich den Messeinsatz 4 des Durchflussmessers 1 zeigenden Fig. 3 - 5 weitere Details und Vorteile der Ringstege 23, 24 inklusive ihrer Stegausnehmungen 19 - 22 erläutert.

Die jeweils innerhalb des Ringstegs 23 oder 24 angeordneten Stegausnehmungen 19, 20 bzw. 21, 22 sind gegeneinander tangential versetzt, insbesondere jeweils um einen steginternen tangentialen Versatzwinkel α1. Außerdem sind die Stegausnehmungen 19, 20 des in Durchflussrichtung 3 vorne angeordneten Ringstegs 23 gegenüber den Stegausnehmungen 21, 22 des axial benachbarten und in Durchflussrichtung 3 hinten angeordneten Ringstegs 24 ebenfalls tangential versetzt. Dieser weitere tangentiale Versatz zwischen den Stegausnehmungen 19, 21 oder 19, 22 oder 20, 21 oder 20, 22 wird jeweils durch einen stegübergreifenden tangentialen Versatzwinkel α2 beschrieben. Dabei wird mit "tangential" jeweils die Umfangsrichtung um die Flussrichtung 3 bezeichnet. Bei dem gezeigten Ausführungsbeispiel beträgt der steginterne tangentiale Versatzwinkel α1 in beiden Ringstegen 23 und 24 jeweils 180°, wohingegen der stegübergreifende tangentiale Versatzwinkel α2 abhängig von der jeweiligen Paarung der Stegausnehmungen 19 - 22 zwei Werte annimmt, nämlich zum einen 60° und zum anderen 120°.

Bei alternativen nicht gezeigten Ausführungsbeispielen können die tangentialen Versatzwinkel α1 und α2 auch andere Werte aufweisen. So ist es denkbar, dass die Stegausnehmungen 19 - 22 tangential ungleichmäßiger verteilt sind und der stegübergreifende tangentiale Versatzwinkel α2 zwischen den Stegausnehmungen 19 - 22 axial benachbarter Ringstege 23, 24 Werte von 45° und 135° oder sogar 30° und 150° annimmt. Ebenso gibt es alternative Ausführungsbeispiele, bei denen die Stegausnehmungen 19 - 22 tangential gleichmäßiger verteilt sind und der stegübergreifende tangentiale Versatzwinkel α2 zwischen den Stegausnehmungen 19 - 22 axial benachbarter Ringstege 23, 24 Werte von 75° und 105° oder bei allen Paarungen jeweils den gleichen Wert von 90° annimmt. Im zuletzt genannten Fall liegt über die zwei Ringstege 23, 24 hinweg betrachtet die gleichmäßigste Verteilung der vier Stegausnehmungen 19 - 22 vor. Weiterhin ist es möglich, dass mehr als zwei Ringstege und/oder innerhalb eines Ringstegs eine andere Anzahl an Stegausnehmungen vorhanden ist. Außerdem ist auch die Ringstegform nicht zwingend. Andere an die jeweilige Geometrieform des Gehäuses und des Messkanals des betreffenden Durchflussmessers angepasste Stegformen sind ebenfalls möglich. Auch bei dem gezeigten Ausführungsbeispiel des Durchflussmessers 1 haben die Ringstege 23, 24 keine exakte Ringgeometrie. Wie aus den Querschnittsabbildungen gemäß Fig. 4 und 5 ersichtlich, ist oben an den Ringstegen 23, 24 jeweils eine im eingesetzten Zustand des Messeinsatzes 4 den Ultraschallwandlern 14, 15 zugewandte Abflachung 25 vorhanden. Die Abflachung 25 ist optional. Sie dient der zusätzlichen Sicherstellung einer korrekten Einbaulage des Messeinsatzes 4 im Gehäuse 2.

Bei dem gezeigten Ausführungsbeispiel des Durchflussmessers 1 bewirkt der stegübergreifende tangentiale Versatzwinkel α2 von etwa 60° und von etwa 120° die Ausbildung des vorteilhaften abschnittsweise gegenüber der Durchflussrichtung 3 geneigten Nebendurchflusswegs 18 und damit die besonders günstige Um- oder/und Durchspülung potentieller toter Zonen.

Der längs der Nebendurchflusswege 18 strömende Anteil des Mediums ist deutlich kleiner als der die Messstrecke 8 passierende Anteil des Mediums. Dies ergibt sich aufgrund der verglichen mit der Messstrecke 8 geringeren freien Durchflussfläche innerhalb der Nebendurchflusswege 18, insbesondere im Bereich der Ringstege 23, 24. Die vom Hauptflussstrang des Mediums durchströmte Messstrecke 8 hat eine an allen axialen Stellen im Wesentlichen gleich große senkrecht zur Durchflussrichtung 3 orientierte Hauptflussquerschnittsfläche A1. Für die Nebendurchflusswege 18 stellen die Ringstege 23, 24 die axialen Positionen dar, die am engsten sind und den kleinsten Durchflussquerschnitt haben. An jedem der Ringstege 23 und 24 ist für den Nebenflussstrang eine durch die zugehörigen Stegausnehmungen 19, 20 bzw. 21, 22 bestimmte gesamte Nebenflussquerschnittsfläche A2 vorhanden. Die Nebenflussquerschnittsfläche A2 setzt sich jeweils aus zwei Teilquerschnittsflächen, nämlich die der Stegausnehmungen 19 und 20 oder die der Stegausnehmungen 21 und 22 zusammen.

In Fig. 5 sind die Hauptflussquerschnittsfläche A1 und die (zweiteilige) Nebenflussquerschnittsfläche A2, die im Bereich des hinteren Ringstegs 24 als senkrecht zur Durchflussrichtung 3 orientierte Durchtrittsflächen für das Medium vorhanden sind, schraffiert eingetragen. Bei dem gezeigten Ausführungsbeispiel hat die Nebenflussquerschnittsfläche A2 insgesamt eine Größe von etwa 8 % der Größe der Hauptflussquerschnittsfläche A1. Bei alternativen nicht gezeigten Ausführungsbeispielen kann die Nebenflussquerschnittsfläche A2 relativ gesehen größer sein und eine Größe von z.B. etwa 15 % der der Hauptflussquerschnittsfläche A1 haben. Ebenso sind Ausführungsbeispiele mit einer relativ gesehen kleineren Nebenflussquerschnittsfläche A2 möglich. Deren Größe kann dann beispielsweise bei etwa 6 % oder auch sogar nur 1 % der Größe der Hauptflussquerschnittsfläche A1 liegen.

Insgesamt wird nur wenig von dem Medium als Nebenflussstrang an der eigentlichen Messstrecke 8 vorbeigeleitet, so dass der Durchflussmesser 1 trotz dieser Abzweigung eines Teils des Mediums eine sehr hohe Messgenauigkeit hat. Der als Nebenflussstrang abgezweigte Anteil bewirkt aber eine sehr effiziente Um-/Durchspülung potentieller toter Zonen, so dass eine unerwünschte Bakterienbildung innerhalb des Mediums vermeiden werden kann.

## Patentansprüche

1. Durchflussmesser zur schallbasierten Erfassung einer Durchflussmenge eines flüssigen oder gasförmigen Mediums mit einem Gehäuse (2) und einem in das Gehäuse eingesetzten Messeinsatz (4), wobei
a) der Messeinsatz (4) eine während des Betriebs von einem Hauptflussstrang des Mediums in einer Durchflussrichtung (3) durchströmte Messstrecke (8) enthält,
b) die Messstrecke (8) einen während des Betriebs von dem Hauptflussstrang des Mediums durchströmten und von einer Messkanalwand (17) umgebenen Innenraum hat,
c) in einem Zwischenraum (17a) zwischen einer von dem Innenraum abgewandten Außenseite der Messkanalwand (17) und einer Innenseite einer Gehäusewand (13) des Gehäuses (2) mindestens ein Nebendurchflussweg (18) für einen Nebenflussstrang des Mediums gebildet ist,
**dadurch gekennzeichnet, dass**
d) jeder Nebendurchflussweg (18) zumindest abschnittsweise unter einem Neigungswinkel (β) von größer als 0° zu der Durchflussrichtung (3) verläuft, und
e) zwischen der Außenseite der Messkanalwand (17) und der Innenseite der Gehäusewand (13) mindestens zwei in Durchflussrichtung (3) hintereinander angeordnete Stege (23, 24) angebracht sind, die jeweils mindestens eine Stegausnehmung (19, 20, 21, 22) haben, welche jeweils eine in die Durchflussrichtung (3) verlaufende Durchgangsöffnung bildet, wobei jede Durchgangsöffnung eines Stegs (23) bezogen auf die Durchflussrichtung radial oder tangential versetzt zu jeder Durchgangsöffnung des in Durchflussrichtung (3) benachbart angeordneten Stegs (24) angeordnet ist.

2. Durchflussmesser nach Anspruch 1, **dadurch gekennzeichnet, dass** der Neigungswinkel (β) im Bereich zwischen 5° und 85°, bevorzugt zwischen 15° und 75°, höchst bevorzugt zwischen 30° und 60° liegt.

3. Durchflussmesser nach Anspruch 1 oder 2, **dadurch gekennzeichnet, dass** der Hauptflussstrang zumindest an einer Position in Durchflussrichtung (3) eine senkrecht zur Durchflussrichtung (3) orientierte Hauptflussquerschnittsfläche (A1) und der Nebenflussstrang an dieser Position in Durchflussrichtung (3) eine senkrecht zur Durchflussrichtung (3) orientierte Nebenflussquerschnittsfläche (A2) hat, deren Größe im Bereich zwischen 1% und 15%, bevorzugt zwischen 3% und 13%, höchst bevorzugt zwischen 5% und 10% der Größe der Hauptquerschnittsfläche (A1) liegt.

4. Durchflussmesser nach einem der vorhergehenden Ansprüche, **dadurch gekennzeichnet, dass** jeder Steg (23, 24) die Messkanalwand (17) im Wesentlichen vollständig umgibt.

5. Durchflussmesser nach einem der vorhergehenden Ansprüche, **dadurch gekennzeichnet, dass** jeder Steg im Wesentlichen als ein Ringsteg (23, 24) ausgebildet ist.

6. Durchflussmesser nach einem der vorhergehenden Ansprüche, **dadurch gekennzeichnet, dass** jeder Steg (23, 24) einen Zwischenraum zwischen der Innenseite der Gehäusewand (13) und der Außenseite der Messkanalwand (17) abgesehen von den die Durchgangsöffnungen bildenden Stegausnehmungen (19, 20, 21, 22) jeweils vollständig verschließt.

7. Durchflussmesser nach einem der vorhergehenden Ansprüche, **dadurch gekennzeichnet, dass** jeder Steg (23, 24) einstückig an der Außenseite der Messkanalwand (17) angebracht ist.

8. Durchflussmesser nach einem der vorhergehenden Ansprüche, **dadurch gekennzeichnet, dass** jede Stegausnehmung (19, 20) bezogen auf die Durchflussrichtung (3) tangential jeweils um einen Versatzwinkel (α2) aus dem Bereich [30°; 150°] gegenüber jeder Stegausnehmung (21, 22) des in Durchflussrichtung (3) benachbarten Stegs (24) versetzt ist.

9. Durchflussmesser nach einem der vorhergehenden Ansprüche, **dadurch gekennzeichnet, dass** jeder Steg (23; 24) zwei bezogen auf die Durchflussrichtung (3) tangential um 180° gegeneinander versetzte Stegausnehmungen (19, 20; 21, 22) hat.

10. Durchflussmesser nach Anspruch 9, **dadurch gekennzeichnet, dass** die Stegausnehmungen (19, 20; 21, 22) von in Durchflussrichtung (3) zueinander benachbarten Stegen (23, 24) bezogen auf die Durchflussrichtung (3) tangential jeweils um 60° oder 120° gegeneinander versetzt sind.

## Claims

1. Flow meter for the sound-based recording of a flow quantity of a liquid or gaseous medium with a housing (2) and a measuring insert (4) inserted into the housing, wherein
a) the measuring insert (4) contains a measuring section (8) through which a main flow leg of the medium flows in a flow direction (3) during operation,
b) the measuring section (8) has an interior space through which the main flow leg of the medium flows during operation and which is enclosed by a measuring channel wall (17),
c) in an intermediate space (17a) between an outer side of the measuring channel wall (17) facing away from the interior space and an inside of a housing wall (13) of the housing (2), at least one secondary flow path (18) for a secondary flow leg of the medium is formed,
**characterised in that**
d) each secondary flow path (18) runs, at least in sections, at an angle of inclination (β) of greater than 0° to the flow direction (3), and
e) attached between the outside of the measuring channel wall (17) and the inside of the housing wall (13) are at least two webs (23, 24) arranged behind one another in the flow direction (3), which each have at least one web recess (19, 20, 21, 22), which respectively forms a through-opening running in the flow direction (3), wherein each through-opening of a web (23) is arranged radially or tangentially offset relative to the flow direction to each through-opening of the adjacent web (24) in the flow direction (3).

2. Flow meter according to claim 1, **characterised in that** the angle of inclination (β) is in the range between 5° and 85°, preferably between 15° and 75°, and most preferably between 30° and 60°.

3. Flow meter according to claim 1 or 2, **characterised in that** the main flow leg has, at least at one position in the flow direction (3), a main flow cross-sectional area (A1) oriented perpendicular to the flow direction (3) and the secondary flow leg at this position in the flow direction (3) has a secondary flow cross-sectional area (A2) oriented perpendicular to the flow direction (3), the magnitude of which is in the range between 1% and 15%, preferably between 3% and 13%, most preferably between 5% and 10% of the magnitude of the main cross-sectional area (A1).

4. Flow meter according to one of the preceding claims, **characterised in that each** web (23, 24) substantially completely encloses the measuring channel wall (17).

5. Flow meter according to one of the preceding claims, **characterised in that** each web is formed substantially as an annular web (23, 24).

6. Flow meter according to one of the preceding claims, **characterised in that** each web (23, 24) closes an intermediate space between the inside of the housing wall (13) and the outside of the measuring channel wall (17) completely in each case apart from the web recesses (19, 20, 21, 22) forming the through-openings.

7. Flow meter according to one of the preceding claims, **characterised in that** each web (23, 24) is attached in one piece to the outside of the measuring channel wall (17).

8. Flow meter according to one of the preceding claims, **characterised in that** each web recess (19, 20) is offset tangentially relative to the flow direction (3) in each case by an offset angle (α2) from the range [30°; 150°] relative to each web recess (21, 22) of the adjacent web (24) in the flow direction (3).

9. Flow meter according to one of the preceding claims, **characterised in that** each web (23; 24) has two web recesses (19, 20; 21, 22) offset tangentially to one another by 180° relative to the flow direction (3).

10. Flow meter according to claim 9, **characterised in that** the web recesses (19, 20; 21, 22) of webs (23, 24) adjacent to one another in the flow direction (3) are offset tangentially to one another respectively by 60° or 120° relative to the flow direction (3).

## Revendications

1. Débitmètre permettant la détection acoustique d'un débit d'un milieu liquide ou gazeux, comprenant un boîtier (2) et un insert de mesure (4) inséré dans le boîtier, dans lequel
a) l'insert de mesure (4) contient une section de mesure (8) traversée pendant le fonctionnement par un jet d'écoulement principal du milieu dans une direction de débit (3),
b) la section de mesure (8) présente un espace intérieur traversé pendant le fonctionnement par le jet d'écoulement principal et entouré par une paroi de canal de mesure (17),
c) au moins une voie de débit secondaire (18) pour un jet d'écoulement secondaire du milieu est formée dans un espace intermédiaire (17a) entre une face extérieure, opposée à l'espace intérieur, de la paroi de canal de mesure (17) et une face intérieure d'une paroi de boîtier (13) du boîtier (2),
**caractérisé en ce que**
d) chaque voie de débit secondaire (18) s'étend au moins en partie en formant un angle d'inclinaison (β) supérieur à 0° par rapport à la direction de débit (3), et
e) au moins deux éléments de liaison (23, 24) agencés l'un derrière l'autre dans la direction de débit (3) sont montés entre la face extérieure de la paroi de canal de mesure (17) et la face intérieure de la paroi de boîtier (13), et présentent chacun au moins un évidement d'élément de liaison (19, 20, 21, 22), lequel forme respectivement un orifice de passage s'étendant dans la direction de débit (3), chaque orifice de passage d'un élément de liaison (23) étant ménagé de manière radiale ou tangentielle par rapport à la direction de débit en étant décalé de chaque orifice de passage de l'élément de liaison (24) agencé de manière adjacente dans la direction de débit (3).

2. Débitmètre selon la revendication 1, **caractérisé en ce que** l'angle d'inclinaison (β) se situe dans la plage comprise entre 5° et 85°, de préférence entre 15° et 75°, idéalement entre 30° et 60°.

3. Débitmètre selon la revendication 1 ou 2, **caractérisé en ce que** le jet d'écoulement principal présente au moins dans une position dans la direction de débit (3) une surface de section transversale d'écoulement principal (A1) orientée perpendiculairement à la direction de débit (3) et le jet de flux secondaire présente dans cette position dans la direction de débit (3) une surface de section transversale d'écoulement secondaire (A2) orientée perpendiculairement à la direction de débit (3), surface dont la grandeur se situe dans la plage comprise entre 1 % et 15 %, de préférence entre 3 % et 13 %, idéalement entre 5 % et 10 % de la grandeur de la surface de section transversale principale (A1).

4. Débitmètre selon l'une quelconque des revendications précédentes, **caractérisé en ce que** chaque élément de liaison (23, 24) entoure sensiblement entièrement la paroi de canal de mesure (17).

5. Débitmètre selon l'une quelconque des revendications précédentes, **caractérisé en ce que** chaque élément de liaison est réalisé sensiblement sous la forme d'un élément de liaison annulaire (23, 24).

6. Débitmètre selon l'une quelconque des revendications précédentes, **caractérisé en ce que** chaque élément de liaison (23, 24) ferme respectivement entièrement un espace intermédiaire entre la face intérieure de la paroi de boîtier (13) et la face extérieure de la paroi de canal de mesure (17), hormis les évidements d'élément de liaison (19, 20, 21, 22) formant les orifices de passage.

7. Débitmètre selon l'une quelconque des revendications précédentes, **caractérisé en ce que** chaque élément de liaison (23, 24) est monté d'une seule pièce sur la face extérieure de la paroi de canal de mesure (17).

8. Débitmètre selon l'une quelconque des revendications précédentes, **caractérisé en ce que** chaque évidement d'élément de liaison (19, 20) est décalé par rapport à la direction de débit (3) de manière tangentielle respectivement d'un angle de décalage (α2) faisant partie de la plage [30°; 150°] par rapport à chaque évidement d'élément de liaison (21, 22) de l'élément de liaison (24) adjacent dans la direction de débit (3).

9. Débitmètre selon l'une quelconque des revendications précédentes, **caractérisé en ce que** chaque élément de liaison (23 ; 24) présente deux évidements d'élément de liaison (19, 20 ; 21, 22) décalés l'un de l'autre de 180° de manière tangentielle par rapport à la direction de débit (3).

10. Débitmètre selon la revendication 9, **caractérisé en ce que** les évidements d'élément de liaison (19, 20 ; 21, 22) des éléments de liaison (23, 24) adjacents les uns aux autres dans la direction de débit (3) sont décalés les uns des autres respectivement de 60° ou de 120° de manière tangentielle par rapport à la direction de débit (3).
